# DEMANDE DE BREVET EUROPEEN

(11) **EP 4 554 062 A1**
(43) Date de publication de la demande: **14.05.2025**
(21) Numéro de dépôt: 24210991.6
(22) Date de dépôt: 05.11.2024
(51) Int. Cl.: H02K 5/16, H02K 5/173, H02K 5/24

(54) **SYSTÈME DE TRANSMISSION D'UN COUPLE MOTEUR**

(30) Priorité: 10.11.2023 FR 2312274
(71) Demandeur: NTN Europe, 74000 Annecy (FR)
(72) Inventeur: POURROY-SOLARI, Vincent, 74230 Thones (FR); THOMAS, Romain, 74230 Dingy-Saint-Clair (FR)
(74) Mandataire: Sayettat, Julien Christian

(57) **Abrégé**

L'invention concerne un système de transmission d'un couple moteur comprenant un rotor (1) entraîné en rotation par rapport à un stator (2) logé dans un carter (3), ledit rotor étant monté en rotation dans le carter (3) par l'intermédiaire d'un palier arrière (4) et d'un palier avant (5) qui sont espacés axialement entre ledit rotor et ledit carter, ledit rotor étant équipé d'un mécanisme (6) de transmission du couple qui est disposé à l'avant du palier avant (5), chacun desdits paliers présentant un organe intérieur (4i, 5i) fixé autour du rotor (1), un organe extérieur (4e, 5e) et des corps roulants disposés entre lesdits organes pour permettre la rotation dudit organe intérieur par rapport audit organe extérieur autour de l'axe (A) du rotor (1), l'organe extérieur (4e) du palier arrière (4) étant immobilisé axialement dans le carter (3), l'organe extérieur (5e) du palier avant (5) étant monté glissant axialement dans ledit carter.

## Description

L'invention concerne un système de transmission d'un couple moteur comprenant un rotor entraîné en rotation par rapport à un stator logé dans un carter.

L'invention concerne en particulier une machine électrique de type moteur et/ou générateur dans laquelle le carter intègre des moyens de couplage électromagnétique avec le rotor de sorte à transformer une énergie électrique en énergie mécanique transmise par ledit rotor et/ou une telle énergie mécanique en énergie électrique.

Elle s'applique notamment à de telles machines pour la propulsion d'un véhicule automobile à moteur électrique, dans lesquelles le rotor comprend un mécanisme de transmission d'un couple moteur aux roues, ledit mécanisme permettant également de transmettre un couple moteur desdites roues pour générer un courant électrique de recharge d'une batterie.

De façon conventionnelle, le rotor est monté en rotation dans le carter par l'intermédiaire d'un palier arrière et d'un palier avant qui sont espacés axialement entre ledit rotor et ledit carter, chacun desdits paliers présentant un organe intérieur fixé autour du rotor, un organe extérieur et des corps roulants disposés entre les organes pour permettre la rotation dudit organe intérieur par rapport audit organe extérieur autour de l'axe du rotor.

Outre leur fonction de guidage en rotation du rotor, les paliers doivent maintenir axialement et radialement ledit rotor dans le carter afin de garantir une transmission optimale du couple moteur, ainsi que la fiabilité de la coopération entre ledit rotor et le stator.

En particulier, les paliers sont soumis à des efforts mécaniques importants lors du fonctionnement du système, notamment générés par le mécanisme de transmission, la masse dudit système et les balourds mécanique et magnétique, ces efforts étant d'autant plus contraignants dans une application de haute vitesse, forte charge, haute température et longue durée de vie, comme notamment dans le domaine automobile.

Plus précisément, le palier avant qui est disposé à proximité du mécanisme de transmission du couple est fortement sollicité radialement et axialement, dans des proportions telles que la pression de Hertz atteinte dans ledit palier peut, sauf à augmenter de façon inacceptable son encombrement, dépasser notablement sa capacité à maintenir son fonctionnement dans la durée, et sans maintenance.

L'invention a pour but de perfectionner l'art antérieur en proposant notamment un système de transmission d'un couple moteur dans lequel les paliers assurent un compromis optimal entre leurs fonctions de guidage et de maintien du rotor dans le carter, et ce notamment dans une application de haute vitesse, forte charge, haute température et longue durée de vie qui nécessite un débattement axial réduit du rotor tout en restant dans un encombrement acceptable pour permettre une intégration dans un ensemble compact.

A cet effet, l'invention propose un système de transmission d'un couple moteur comprenant un rotor entraîné en rotation par rapport à un stator logé dans un carter, ledit rotor étant monté en rotation dans le carter par l'intermédiaire d'un palier arrière et d'un palier avant qui sont espacés axialement entre ledit rotor et ledit carter, ledit rotor étant équipé d'un mécanisme de transmission du couple qui est disposé à l'avant du palier avant, chacun desdits paliers présentant un organe intérieur fixé autour du rotor, un organe extérieur et des corps roulants disposés entre les organes pour permettre la rotation dudit organe intérieur par rapport audit organe extérieur autour de l'axe du rotor, l'organe extérieur du palier arrière étant immobilisé axialement dans le carter, l'organe extérieur du palier avant étant monté glissant axialement dans ledit carter, les organes du palier arrière présentant chacun deux pistes de roulement qui sont espacées axialement de sorte à former entre lesdits organes deux chemins de roulement dans lesquels est disposée au moins une rangée de corps roulants sphériques qui est en contact oblique dans les chemins de roulement.

D'autres objets et avantages de l'invention apparaîtront dans la description qui suit, faite en référence aux figures annexées, dans lesquelles :
- les figures 1a, 1b, 1c et 1d représentent schématiquement un système de transmission selon un mode de réalisation de l'invention, respectivement en perspective vue de l'arrière (figure 1a), en coupe longitudinale (figure 1b), en agrandissement de la figure 1b au niveau du palier avant (figure 1c) et en agrandissement de la figure 1b au niveau du palier arrière (figure 1d) ;
- la figure 2 est une vue analogue à la figure 1d montrant une variante de réalisation ;
- les figures 3 à 5 sont des vues analogues à la figure 1d montrant respectivement un autre mode de réalisation du palier arrière selon l'invention.

En relation avec ces figures, on décrit ci-dessous un système de transmission d'un couple moteur, par exemple sous la forme d'une machine électrique de type moteur et/ou générateur qui peut être utilisée pour la propulsion d'un véhicule automobile à moteur électrique.

Le système de transmission comprend un rotor 1 entraîné en rotation autour d'un axe A par rapport à un stator 2 logé dans un carter 3 intégrant des moyens de couplage électromagnétique avec ledit rotor de sorte à transformer une énergie électrique en énergie mécanique transmise par ledit rotor et/ou une telle énergie mécanique en énergie électrique.

Le rotor 1 est monté en rotation dans le carter 3 par l'intermédiaire d'un palier arrière 4 et d'un palier avant 5 qui sont espacés axialement entre ledit rotor et ledit carter, notamment en étant disposés chacun dans une interface formée entre une paroi arrière - respectivement avant - du carter 3 et une portion arrière - respectivement avant - du rotor 1.

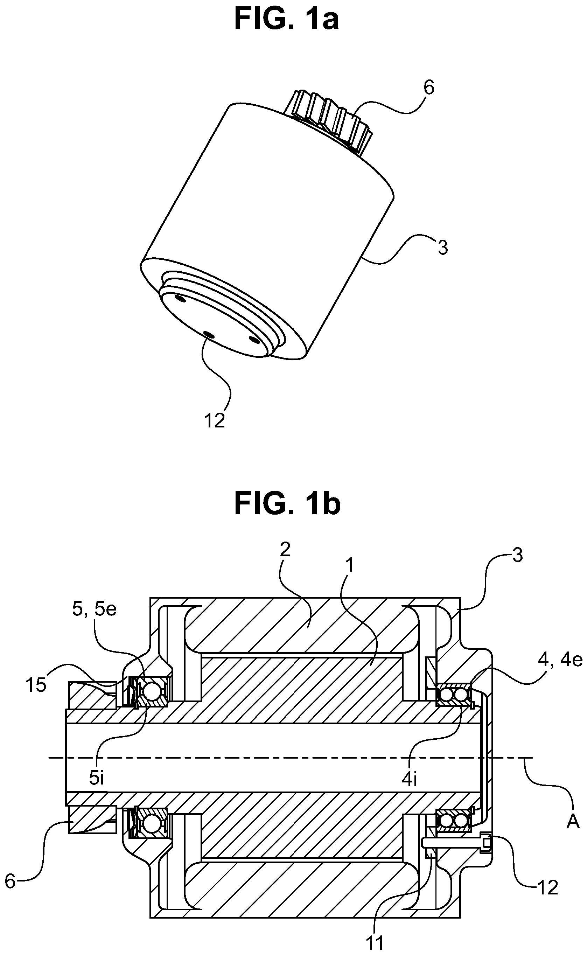

Dans la description, les termes « avant » et « arrière » sont définis par rapport au sens d'utilisation du système pour une localisation respectivement à gauche et à droite notamment sur la figure 1b. Les termes « extérieur » et « intérieur » sont définis par rapport à l'axe A de rotation du rotor 1, respectivement pour une localisation éloignée et proche dudit axe.

Le rotor 1 présente un mécanisme 6 de transmission du couple qui est disposé à l'avant du palier avant 5. En relation avec la figure 1a, le mécanisme 6 de transmission du couple comprend au moins un engrenage qui est monté autour du rotor 1 à l'avant du palier avant 5.

En particulier, l'engrenage peut être de type hélicoïdal pour venir s'engrener avec un engrenage complémentaire de l'élément entraîné, la coopération desdits engrenages induisant des variations d'effort sur le rotor 1 lors de la transmission du couple moteur.

Chacun des paliers 4, 5 présente un organe intérieur 4i, 5i fixé autour du rotor 1, un organe extérieur 4e, 5e et des corps roulants disposés entre lesdits organes pour permettre la rotation dudit organe intérieur par rapport audit organe extérieur autour de l'axe A du rotor 1.

Dans un moteur électrique, la modulation du courant d'alimentation nécessaire à la variation de vitesse est assurée par les commutations de transistors intégrés à l'électronique de puissance. Ces commutations génèrent des harmoniques haute fréquence qui chargent électriquement le rotor 1 par rapport au stator 2 jusqu'à une tension de claquage.

Les paliers 4, 5 étant l'un des chemins électriques les plus courts entre rotor 1 et stator 2, il est courant que le claquage ait lieu en leur sein en générant des endommagements locaux pouvant mener à des défaillances sérieuses (bruit, écaillage, mort du palier).

Pour éviter ces risques, les corps roulants d'au moins un palier 4, 5 sont avantageusement réalisés à base d'un matériau céramique non conducteur électriquement, en particulier à base de Si₃N₄, nuance retenue pour ses bonnes performances mécaniques. Toutefois, le module d'Young supérieur (300GPa pour Si₃N₄ contre 210GPa pour l'acier 100Cr6) génère une augmentation de pression de Hertz pouvant atteindre +10% et limitant la capacité du palier 4, 5 et sa durée de vie.

Les organes intérieurs 4i, 5i présentent chacun un alésage, le rotor 1 présentant une portée avant 7a - respectivement arrière 7b - sur laquelle une portée complémentaire dudit alésage est fixée notamment par frettage.

Sur les figures, les portées avant 7a - respectivement arrière 7b - s'étendent axialement en présentent un épaulement arrière 8a - respectivement avant 8b - sur lesquels l'organe intérieur 5i, 4i vient respectivement en butée axiale en fin de frettage.

Les organes intérieurs 4i, 5i sont maintenus en butée axiale sur les épaulements 8b, 8a par un moyen de retenue. Dans les modes de réalisation représentés, le moyen de retenue comprend un anneau 9 disposé dans une rainure 10 formée à l'opposé de l'épaulement 8a, 8b, ledit anneau étant en interférence axiale avec l'organe intérieur 4i, 5i pour le retenir en axialement sur ledit épaulement.

L'organe extérieur 4e du palier arrière 4 est immobilisé axialement dans le carter 3. En particulier, le carter 3 présente une portée arrière 3a sur laquelle l'organe extérieur 4e du palier arrière 4 est fixé, notamment par frettage, ladite portée arrière étant bordée par un épaulement 3b sur lequel ledit organe extérieur est maintenu en butée axiale par un moyen de retenue.

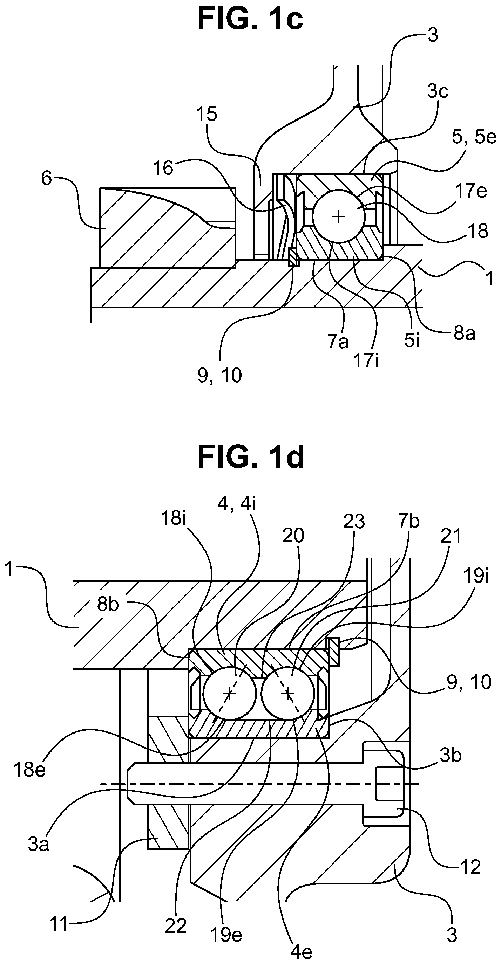

En relation avec les figures 1d, 3 et 4, le moyen de retenue comprend une plaque 11 qui est serrée axialement sur le carter 3 à l'opposé d'un épaulement arrière 3b, ladite plaque étant en interférence axiale avec l'organe extérieur 4e pour le retenir axialement en appui sur ledit épaulement. En particulier, le serrage est réalisé par une vis 12 engagée dans le carter 3 et la plaque 11.

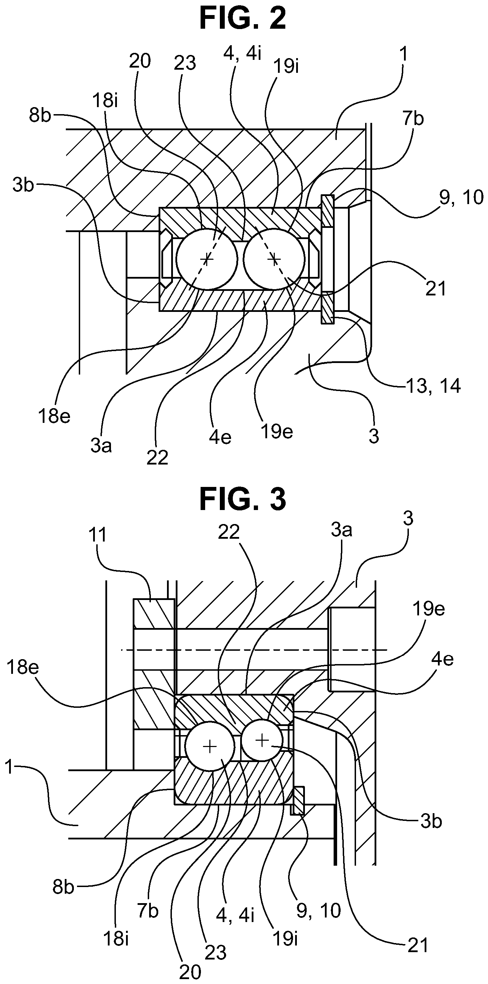

La figure 2 représente un autre mode de réalisation dans lequel le moyen de retenue comprend un anneau 13 disposé dans une rainure 14 formée à l'opposé d'un épaulement avant 3b, ledit anneau étant en interférence axiale avec l'organe extérieur 4e pour le retenir axialement en appui sur ledit épaulement.

L'organe extérieur 5e du palier avant 5 est monté glissant axialement dans le carter 3. Ainsi, en libérant axialement le palier avant 5, il est possible de l'optimiser pour supporter les charges radiales importantes induites par le mécanisme de transmission 6, et ce sans contrainte sur son comportement axial dans la mesure où les efforts axiaux sont repris par le palier arrière 4, qui lui peut être optimisé pour limiter le débattement axial du rotor 1.

Le système de transmission peut comprendre un moyen de contrainte élastique axiale 16 du glissement de l'organe extérieur 5e du palier avant 5, notamment en direction du palier arrière 4. L'objectif de ce moyen de contrainte élastique étant de limiter le débattement axial de l'organe extérieur 5e du palier, lors des inversions de couples du système (passage de traction à régénération). Ces inversions fréquentes lors de l'utilisation à faible charge du système (typiquement en conduite urbaine pour une application automobile) peuvent résulter en la génération de bruit de type "claquement".

Selon une réalisation, la limitation du débattement axial maximal du rotor 1, conséquemment de l'organe extérieur 5e, peut rendre superflue l'utilisation du moyen de contrainte élastique 16.

Dans les modes de réalisation représentés, le carter 3 présente une portée avant 3c sur laquelle l'organe extérieur 5e du palier avant 5 est monté glissant axialement, ladite portée avant étant bordée par une paroi 15 s'étendant radialement à l'avant dudit palier avant, le moyen de contrainte élastique 16 étant comprimé axialement entre ladite paroi et ledit organe extérieur.

En particulier, le moyen de contrainte élastique comprend une rondelle 16 ondulée axialement pour induire une précharge axiale sur l'organe extérieur 5e.

En relation avec la figure 1c, les organes 5i, 5e du palier avant 5 présentent chacun une piste de roulement 17i, 17e formant entre lesdits organes un chemin de roulement dans lequel est disposée une rangée 18 de corps roulants sphériques qui sont montés en contact radial dans ledit chemin de roulement.

En particulier, les corps roulants sont sphériques, dans la mesure où cette configuration génère moins de pertes par friction ou frottements qu'une solution avec des corps roulants coniques ou cylindriques.

De façon avantageuse relativement à la reprise des efforts radiaux, le taux d'osculation (c'est-à-dire le rapport du rayon du chemin de roulement sur le diamètre du corps roulant sphérique) de l'organe intérieur 5i est inférieur à 0,51, le taux d'osculation de l'organe extérieur 5e étant inférieur à 0,52, de sorte à limiter la pression de Hertz dans le palier avant 5.

Ces faibles taux d'osculation peuvent être envisagés dans la mesure où le palier arrière 4 maintient axialement le rotor 1, et donc la cohésion des organes 5i, 5e du palier avant 5, notamment sans risquer un débordement d'ellipse de pression de Hertz (c'est-à-dire une zone de contraintes qui sort du chemin).

En particulier, sans charge axiale à reprendre, les osculations du palier avant 5 peuvent être réduites à 0,508 pour l'organe intérieur 5i et à 0,518 pour l'organe extérieur 5e, voir 0,506 / 0,516, et même 0,504 / 0,512, sachant qu'un passage de 0,51 à 0,505 réduit la pression maximale dans le palier avant 5 de 12%, ce qui augmente la durée de vie de plus de 30%.

Le rotor 1 en fonctionnement présente un débattement axial qui est préférentiellement inférieur à 200 µm, notamment inférieur à 150 µm et idéalement sous 100 µm pour garantir une transmission optimale du couple moteur, ainsi que la fiabilité de la coopération entre ledit rotor et le stator 2. Pour ce faire, le jeu axial entre les organes 4i, 4e du palier arrière 4 est inférieur à 100 µm, de préférence inférieur à 30 µm, notamment de l'ordre de 60 µm. Toutefois, dans une application haute vitesse, un jeu axial entre les organes 4i, 4e du palier arrière 4 est nécessaire pour éviter l'échauffement et la consommation d'énergie par frottements excessifs.

En particulier, ce jeu axial entre les organes 4i, 4e du palier arrière 4 conditionne le débattement axial du rotor 1, c'est-à-dire la distance parcourue axialement par le rotor 1 soumis successivement à deux cas de charges extrêmes (un cas de traction suivi d'un cas de régénération dans le cas d'un moteur), qui doit être le plus petit possible.

Ce débattement, notamment induit par l'utilisation de dentures hélicoïdales pour le mécanisme 6, désaligne les dentures des arbres menant et mené, le rotor 1 du stator 2 et l'éventuel système de mesure d'angle moteur par rapport à sa cible. Un trop grand débattement axial peut générer plusieurs défaillances (bruit des dentures, usure des dentures, pertes de rendement, pertes de signal du système de mesure d'angle moteur).

En relation avec les figures 1 à 5, un faible jeu axial peut être obtenu avec un palier arrière 4 dont les organes 4i, 4e présentent chacun deux pistes de roulement 18i, 19i ; 18e, 19e qui sont espacées axialement de sorte à former entre lesdits organes deux chemins de roulement dans lesquels est disposée au moins une rangée 20, 21 de corps roulants sphériques qui est en contact oblique dans lesdits chemins de roulement.

Selon les figures 1 à 4, deux rangées 20, 21 de corps roulants sont disposées en contact oblique sur respectivement un chemin de roulement formé entre les pistes 18i, 18e pour un chemin et entre les pistes 19i, 19e pour l'autre chemin.

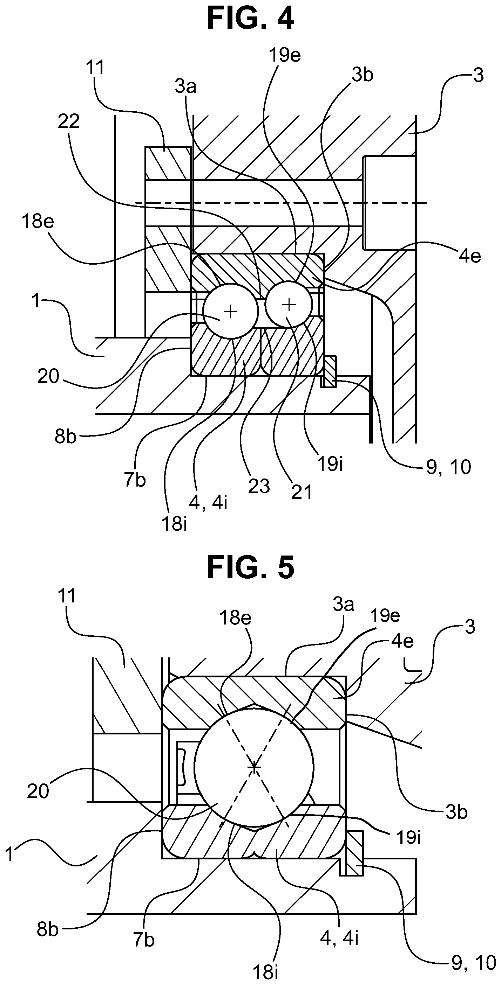

Selon une autre réalisation représentée sur la figure 5, le palier arrière 4 peut être de type à quatre points de contact, c'est-à-dire qu'une rangée 20 de corps roulants sphériques est en contact oblique de part et d'autre dans les chemins de roulement formés entre les pistes 18i, 18e pour un chemin et entre les pistes 19i, 19e pour l'autre chemin. En particulier, l'organe intérieur 4i peut être formé de deux bagues accolées axialement, une piste de roulement 18i, 18e étant formée sur chacune desdites bagues.

En particulier, l'angle de contact oblique, par exemple de l'ordre de 35°, permet d'augmenter le remplissage du chemin de roulement, par l'utilisation de corps roulants supplémentaires, et donc de réduire les efforts sur chaque corps roulant, ce qui permet de réduire les efforts sur les corps roulants, et donc d'envisager une limitation significative de leur taille pour limiter l'encombrement et, notamment en relation avec l'utilisation d'un matériau céramique, le coût induit.

En particulier, par rapport à un palier à une rangée de corps roulants à contact radial, la deuxième rangée 20, 21 de corps roulants peut ne pas augmenter significativement la largeur du palier 4 tout en permettant de réduire le diamètre extérieur.

Sur les figures 1 à 4, les rangées 20, 21 de corps roulants sont en contact oblique dans les chemins de roulement suivant un montage en O, c'est-à-dire que les lignes de charge qui relient les surfaces de contact entre les corps roulants d'une rangée et les pistes 18i, 19i ; 18e, 19e se croisent suivant un O. En variante, un montage en X peut être envisagé.

Dans les modes de réalisation représentés, l'organe extérieur 4e du palier arrière 4 est formé d'une seule pièce sur laquelle les deux pistes de roulement 18e, 19e sont formées, lesdites pistes de roulements étant reliées par une zone centrale 22 formée sur la pièce.

En relation avec les figures 1 à 3, l'organe intérieur 4i du palier arrière 4 est formé d'une seule pièce sur laquelle les deux pistes de roulement 18i, 19i sont formées, lesdites pistes de roulements étant reliées par une zone centrale 23 formée sur la pièce, l'une des zones 22, 23 pouvant former un collet en saillie radiale sur la pièce correspondante.

En particulier, la réalisation d'un palier arrière 4 avec deux organes 4e, 4i monoblocs permet de maitriser au mieux le jeu axial dudit palier, et ce sans appliquer de précharge axiale qui serait préjudiciable aux pertes par friction.

En relation avec la figure 4, l'organe intérieur 4i du palier arrière 4 est formé de deux bagues accolées axialement, une piste de roulement 18i, 19i étant formée sur chacune desdites bagues.

En relation avec les figures 1 et 2, les chemins de roulement présentent sensiblement le même diamètre, un même nombre de corps roulants étant prévu pour chaque rangée 20, 21, notamment en maintenant lesdits corps roulants dans leur rangée 20, 21 au moyen d'une cage de rétention.

Sur les figures 3 et 4, chacune des rangées 20, 21 de corps roulants présente un diamètre primitif, un angle de contact sur le chemin correspondant, un nombre de corps roulants et un diamètre de corps roulants, au moins l'un de ces paramètres géométriques étant différent entre lesdites rangées.

Ainsi, dans la mesure où les rangées 20, 21 de corps roulants assurent l'arrêt axial du rotor 1 selon que l'effort subi entraîne ledit rotor respectivement à gauche ou à droite, les paramètres géométriques de chacune desdites rangées peuvent être optimisés indépendamment en fonction des besoins du sens de l'effort subi, notamment afin de réduire l'encombrement et le coût des corps roulants en céramique.

En particulier, le dimensionnement est fait de telle sorte à diminuer le nombre et la taille des corps roulants utilisés, afin de réduire le coût de l'ensemble et d'obtenir un équilibre idéal des pressions de Hertz vues par chaque rangée 20, 21.

En relation avec la figure 3, la rangée avant 20 présente des paramètres géométriques qui sont optimisés pour reprendre des efforts en traction qui sont supérieurs aux efforts en régénération repris par la rangée arrière 21.

## Revendications

1. Système de transmission d'un couple moteur comprenant un rotor (1) entraîné en rotation par rapport à un stator (2) logé dans un carter (3), ledit rotor étant monté en rotation dans le carter (3) par l'intermédiaire d'un palier arrière (4) et d'un palier avant (5) qui sont espacés axialement entre ledit rotor et ledit carter, ledit rotor étant équipé d'un mécanisme (6) de transmission du couple qui est disposé à l'avant du palier avant (5), chacun desdits paliers présentant un organe intérieur (4i, 5i) fixé autour du rotor (1), un organe extérieur (4e, 5e) et des corps roulants disposés entre lesdits organes pour permettre la rotation dudit organe intérieur par rapport audit organe extérieur autour de l'axe (A) du rotor (1), l'organe extérieur (4e) du palier arrière (4) étant immobilisé axialement dans le carter (3), l'organe extérieur (5e) du palier avant (5) étant monté glissant axialement dans ledit carter, ledit système étant **caractérisé en ce que** les organes (4i, 4e) du palier arrière (4) présentent chacun deux pistes de roulement (18i, 19i ; 18e, 19e) qui sont espacées axialement de sorte à former entre lesdits organes deux chemins de roulement dans lesquels est disposée au moins une rangée (20, 21) de corps roulants sphériques qui est en contact oblique dans les chemins de roulement.

2. Système de transmission selon la revendication 1, **caractérisé en ce que** le rotor (1) présente une portée avant (7a) sur laquelle l'organe intérieur (5i) du palier avant (5) est fixé, ladite portée avant étant bordée par un épaulement arrière (8a) sur lequel ledit organe intérieur est maintenu en butée axiale par un moyen de retenue.

3. Système de transmission selon l'une des revendications 1 ou 2, **caractérisé en ce que** le rotor (1) présente une portée arrière (7b) sur laquelle l'organe intérieur (4i) du palier arrière (4) est fixé, ladite portée arrière étant bordée par un épaulement avant (8b) sur lequel ledit organe intérieur est maintenu en butée axiale par un moyen de retenue.

4. Système de transmission selon l'une quelconque des revendications 1 à 3, **caractérisé en ce que** le carter (3) présente une portée arrière (3a) sur laquelle l'organe extérieur (4e) du palier arrière (4) est fixé, ladite portée arrière étant bordée par un épaulement (3b) sur lequel ledit organe extérieur est maintenu en butée axiale par un moyen de retenue.

5. Système de transmission selon l'une quelconque des revendications 1 à 4, **caractérisé en ce qu'**il comprend un moyen de contrainte élastique axiale (16) du glissement de l'organe extérieur (5e) du palier avant (5).

6. Système de transmission selon la revendication 5, **caractérisé en ce que** le carter (3) présente une portée avant (3c) sur laquelle l'organe extérieur (5e) du palier avant (5) est monté glissant axialement, ladite portée avant étant bordée par une paroi (15) s'étendant radialement à l'avant dudit palier avant, le moyen de contrainte élastique (16) étant comprimé axialement entre ladite paroi et ledit organe extérieur.

7. Système de transmission selon l'une quelconque des revendications 1 à 6, **caractérisé en ce que** l'organe extérieur (4e) du palier arrière (4) est formé d'une seule pièce sur laquelle les deux pistes de roulement (18e, 19e) sont formées.

8. Système de transmission selon l'une quelconque des revendications 1 à 7, **caractérisé en ce que** l'organe intérieur (4i) du palier arrière (4) est formé d'une seule pièce sur laquelle les deux pistes de roulement (18i, 19i) sont formées.

9. Système de transmission selon l'une quelconque des revendications 1 à 8, **caractérisé en ce que** deux rangées (20, 21) de corps roulants sont disposées en contact oblique sur respectivement un chemin de roulement.

10. Système de transmission selon la revendication 9, **caractérisé en ce que** chacune des rangées (20, 21) de corps roulants présente un diamètre primitif, un angle de contact sur le chemin correspondant, un nombre de corps roulants et un diamètre de corps roulants, au moins l'un de ces paramètres géométriques étant différent entre lesdites rangées.

11. Système de transmission selon l'une quelconque des revendications 1 à 8, **caractérisé en ce qu'**une rangée (20) de corps roulants sphériques est en contact oblique de part et d'autre dans les chemins de roulement.

12. Système de transmission selon l'une quelconque des revendications 1 à 11, **caractérisé en ce que** le jeu axial entre les organes (4i, 4e) du palier arrière (4) est inférieur à 100 µm .

13. Système de transmission selon l'une quelconque des revendications 1 à 12, **caractérisé en ce que** les organes (5i, 5e) du palier avant (5) présentent chacun une piste de roulement (17i, 17e) formant entre lesdits organes un chemin de roulement dans lequel est disposée une rangée (18) de corps roulants sphériques qui sont montés en contact radial dans ledit chemin de roulement.

14. Système de transmission selon la revendication 13, **caractérisé en ce que** le taux d'osculation de l'organe intérieur (5i) est inférieur à 0,51, le taux d'osculation de l'organe extérieur (5e) étant inférieur à 0,52.

15. Système de transmission selon l'une quelconque des revendications 1 à 14, **caractérisé en ce que** les corps roulants d'au moins un palier (4, 5) sont réalisés à base d'un matériau céramique non conducteur électriquement.

16. Système de transmission selon l'une quelconque des revendications 1 à 15, **caractérisé en ce que** le mécanisme (6) de transmission du couple comprend au moins un engrenage qui est monté autour du rotor (1) à l'avant du palier avant (5), notamment un engrenage hélicoïdal.
